Europäisches Patentamt

European Patent Office

Office européen des brevets

(11) Veröffentlichungsnummer: **0 472 928 A1**

## (12) EUROPÄISCHE PATENTANMELDUNG

(21) Anmeldenummer: **91112660.5**

(22) Anmeldetag: **27.07.91**

(51) Int. Cl.5: **H02M 7/08**, H02M 1/12

(30) Priorität: **30.08.90 CH 2820/90**

(43) Veröffentlichungstag der Anmeldung:
**04.03.92 Patentblatt 92/10**

(84) Benannte Vertragsstaaten:
**AT BE CH DE DK ES FR GB GR IT LI LU NL SE**

(71) Anmelder: **SIEMENS-ALBIS AKTIENGESELLSCHAFT**
**PV/Patente und Verträge Postfach**
**CH-8047 Zürich(CH)**

(84) **CH LI**

(71) Anmelder: **SIEMENS AKTIENGESELLSCHAFT**
**Wittelsbacherplatz 2**
**W-8000 München 2(DE)**

(84) **BE DE DK ES FR GB GR IT LU NL SE AT**

(72) Erfinder: **Tschannen, Gottfried**
**Seebahnstrasse 177/153**
**CH-8004 Zürich(CH)**

(54) **Verfahren und Schaltungsanordnung zur Reduktion von Oberwellenströmen.**

(57) Das Verfahren und die Schaltungsanordnung eignen sich zur Reduktion von Oberwellenströmen, die an das Stromversorgungsnetz abgegeben werden. Dabei gibt ein Drehstromtransformator (DT2) derart phasenverschobene Spannungen an zwei oder mehrere Gleichrichtereinheiten (GE) ab, dass sich die störenden Oberwellenströme am Eingang des Drehstromtransformators (DT2) gegenseitig aufheben.

Fig. 2

Die vorliegende Erfindung betrifft ein Verfahren und eine Schaltungsanordnung nach dem Oberbegriff des Patentanspruchs 1 bzw. 4.

Gleichrichtereinheiten, die in Stromversorgungsanlagen eingesetzt werden, erzeugen normalerweise Oberwellenströme, die zurück an das Versorgungsnetz abgegeben werden. Die maximal zulässigen Werte für diese Oberwellenströme sind in den nationalen und internationalen Vorschriften festgesetzt und dürfen durch die Verbraucher nicht überschritten werden. Angaben über Oberwellenströme sowie deren Grenzwerte für das schweizerische Stromversorgungsnetz sind z.B. in der Schweizer Norm 413600 bzw. EN 60555 (SEV 3600 bzw. SEV 8601) festgelegt.

Zur Einhaltung der festgelegten Grenzwerte werden die Oberwellenströme in der Praxis zumeist mittels Oberwellenfiltern, Blindstromkondensatoren und Vorschaltdrosseln reduziert. Diese Reduktion der Oberwellenströme ist jedoch vielfach ungenügend, so dass der Verbraucher zusätzlich zu einer Reduktion der Leistungsentnahme aus dem Stromversorgungsnetz gezwungen wird. Ferner sind die erwähnten Filterelemente sehr teuer.

Der vorliegenden Erfindung liegt daher die Aufgabe zugrunde, ein Verfahren und eine Schaltungsanordnung anzugeben, die eine teilweise oder vollständige Reduktion der störenden Oberwellenströme erlaubt. Die Schaltungsanordnung soll ferner mit einem geringen Aufwand realisierbar sein.

Diese Aufgabe wird durch die im kennzeichnenden Teil der Patentansprüche 1 bzw. 4,5 und 6 angegebenen Massnahmen gelöst. Vorteilhafte Ausgestaltungen der Erfindung sind in weiteren Ansprüchen angegeben.

Das erfindungsgemässe Verfahren weist folgende Vorteile auf: Mehrere Oberwellenströme beliebiger Ordnungszahl lassen sich nahezu vollständig reduzieren. Die Schaltungsanordnungen zur Ausführung des Verfahrens lassen sich insbesondere bei der Reduktion nur weniger kritischer Oberwellenströme mit geringem Aufwand realisieren.

Die Erfindung wird nachfolgend anhand einer Zeichnung beispielsweise näher erläutert. Dabei zeigt:

Fig. 1    Eine Schaltungsanordnung zur Reduktion von Oberwellenströmen realisiert mit einem bekannten Drehstromtransformator

Fig. 2    Eine Schaltungsanordnung zur Reduktion von Oberwellenströmen realisiert mit einem Spezial-Spar-Drehstromtransformator

Fig. 3    Eine Vektor-Darstellung der Funktionsweise des Spezial-Spar-Drehstromtransformators

Fig. 4    Eine Schaltungsanordnung zur vollständigen Reduktion aller Oberwellenströme

Die Grundlage für das Verfahren zur Reduktion eines Oberwellenstromes mit der Ordnungszahl n liefert die Tatsache, dass bei einer Phasenschiebung der Grundwelle um den Winkel a die n-te Oberwelle um den n-fachen Winkel (n x a) geschoben wird. Für bestimmte Phasenverschiebungen a lassen sich dabei Oberwellenströme eliminieren. Werden z.B. Teile von n x 30$^\circ$ phasenverschobenen Strömen addiert, lassen sich mehrere Oberwellenströme eliminieren. Im Dreiphasensystem lassen sich Phasenverschiebungen um 30$^\circ$ mittels Stern-Dreieck Transformation relativ einfach realisieren.

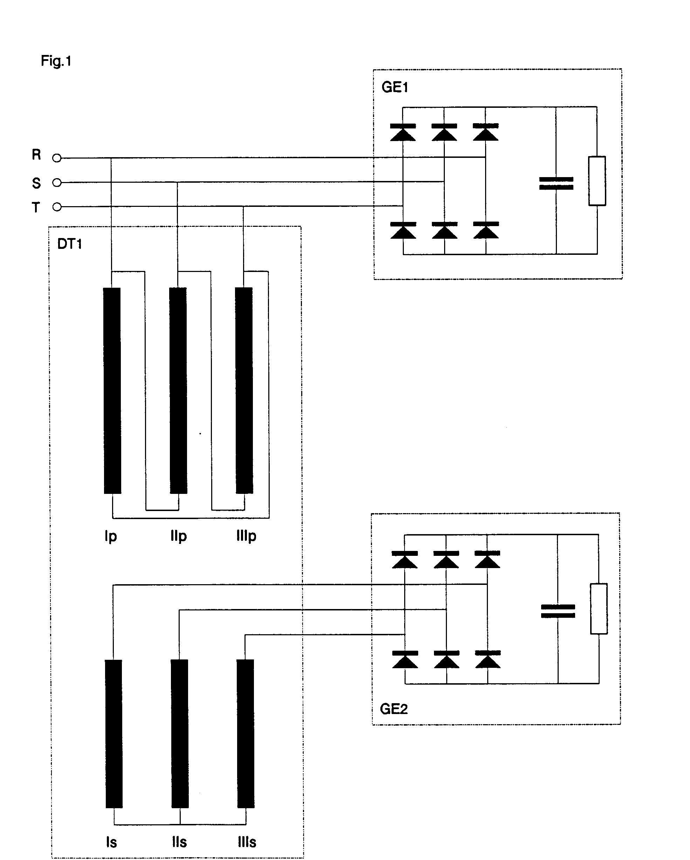

Fig. 1 zeigt einen durch Versorgungsleitungen R, S, T gespeisten Drehstromtransformator DT1 mit in Dreieck und Stern geschalteten Primär- bzw. Sekundärwicklungen. Die Versorgungsleitungen R, S und T sind einerseits mit den Eckpunkten der primärseitigen Dreieckschaltung und andererseits mit den Anschlüssen einer ersten Gleichrichtereinheit GE1 verbunden. Ferner sind die sekundärseitigen Transformatorwicklungen mit einer weiteren Gleichrichtereinheit GE2 verbunden. Der Aufbau der Gleichrichtereinheiten GE1, GE2 mit sechs Dioden, einem Kondensator und einem Widerstand ist bekannt und wird nachfolgend nicht weiter erläutert. Selbstverständlich können in den erfindungsgemässen Schaltungsanordnungen auch andersartig aufgebaute Gleichrichtereinheiten angewendet bzw. eingebaut werden. Durch die bei dieser Transformatorschaltung typischen Phasenverschiebung der Grundwelle (Harmonische mit der Ordnungszahl 1) zwischen der Eingangs- und Ausgangsspannung des Drehstromtransformators DT1 bzw. zwischen den an den Gleichrichtereinheiten GE1, GE2 anliegenden Spannungen von 30$^\circ$ lassen sich dabei Oberwellenströme mit den Ordnungszahlen 5 und 7 sowie 17 und 19 eliminieren. Die Gleichrichtereinheit GE2 erzeugt sekundärseitig Pulsströme, die gegenüber denjenigen des Gleichrichters GE1 um 30$^\circ$ phasenverschoben sind. Weiter werden die sekundärseitig erzeugten Pulsströme transformiert und auf die entsprechenden Primärwicklungen übertragen. Z.B. durch die Addition der primärseitig auftretenden, von den Gleichrichtereinheiten GE1 bzw. GE2 verursachten Oberwellenströme mit den entsprechenden Phasenverschiebungen kann leicht nachgewiesen werden, dass sich diese Spannungen gegeneinander aufheben. Mathematisch lässt sich mit der diskreten Fouriertransformation zeigen, dass dadurch Oberwellenströme der Ordnungszahlen 5, 7, 17 und 19 eliminiert werden. Ferner können z.B. die transformierten Oberwellenströme $i_{Ip}$, $i_{IIp}$, die von der Gleichrichtereinheit GE2 verursacht und in die Primärwicklungen Ip, IIp induziert werden, zu dem von der Gleichrichtereinheit GE1 verursachten Oberwellenstrom $i_R$ addiert werden. Für die Oberwellenströme der Ordnungszahl n wird der Strom $i_R$ der Gleichrichtereinheit GE1 in der Phase R : $i_R$ = A sin (n wt). Der Strom des Gleichrichters GE2 wird aufgeteilt und transformiert. Die zwei resultierenden Komponenten $i_{Ip}$, $i_{IIp}$, die sich zum Strom $i_R$ in der Phase R addieren, sind:

$i_{Ip}$ = B sin (n(wt-a)) und $i_{IIp}$ = -B sin (n(wt-a-120$^\circ$))
bzw. für a = 30$^\circ$:
$i_{Ip}$ = B sin (n (wt-30$^\circ$)) und $i_{IIp}$ = -B sin (n(wt-150$^\circ$)).

Der zweite Teilstrom $i_{IIp}$ ist wegen dem Wicklungssinn negativ und zusätzlich um -120$^\circ$ (Phase T) verschoben. Die Addition der beiden Teilströme:

$i_{Ip}$ + $i_{IIp}$ = 2B sin (n wt-n 90$^\circ$ + 90$^\circ$) cos (n 60$^\circ$ - 90$^\circ$)

wird für n = 5, 7, 17 und 19 unter Berücksichtigung des Übersetzungsverhältnisses(B = $A/3^{1/2}$):

$i_{Ip}$ + $i_{IIp}$ = A sin (n wt) = $-i_R$

Die Addition aller Oberwellenströme für n = 6 +/-1 + k x 12 (k = 0, 1, 2,..) ergibt daher:

$i_{Ip}$ + $i_{IIp}$ + $i_R$ = 0

Die Variablen A, B stehen dabei für die Amplituden der genannten Ströme $i_R$ bzw. $i_{Ip}$, $i_{IIp}$; die Variable w entspricht der Kreisfrequenz der Grundwelle. Für eine festgelegte Ordnungszahl n wird die Phasenverschiebung a zwischen den an die Gleichrichtereinheiten GE1 bzw. GE2 abgegebenen Spannungen jeweils derart gewählt, dass sich die Teilströme $i_R$, $i_{Ip}$, $i_{IIp}$ gegenseitig aufheben. Die Oberwellenströme mit der Ordnungszahl n heben sich dann auf bzw. ergänzen sich zu einem Wechselstrom, dessen Hauptkomponente die Frequenz der Grundwelle aufweist. Durch diesen Sachverhalt wird auch der Leistungsfaktor verbessert, mit dem elektrische Leistung an die Verbraucher abgegeben wird. Die Leistungsentnahme über die Gleichrichtereinheiten GE1, GE2 muss dabei natürlich derart gewählt werden, dass die störenden Oberwellenströme am Eingang der Gleichrichtereinheiten GE1 bzw. GE2 die gleiche Amplitude und die gleiche Form aufweisen. Dadurch wird die vollständige Reduktion dieser Oberwellenströme gewährleistet. Die korrekte Phasenschiebung a kann natürlich auch durch fachmännische Messung im Labor ermittelt werden. D.h. durch kontinuierliche Vergrösserung des Wertes für die Phasenschiebung a wird ermittelt, bei welchen Werten für a welche Oberwellenströme ausgelöscht werden. Bei kleineren Werten für a werden dabei Oberwellenströme mit höherer Ordnungszahl eliminiert. Möglichkeiten zur Abgabe von phasenverschobenen Spannungen an Gleichrichtereinheiten ergeben sich natürlich auch durch Transformatoren mit anderer Schaltung von Primär- und Sekundärwicklungen. So kann z.B. ein Transformator, dessen Primärwicklungen in Stern oder Dreieck geschaltet sind, sekundärseitig drei in Stern und drei in Dreieck geschaltete Sekundärwicklungen aufweisen. Funktionell gleichwertig dazu ist die Verwendung von zwei oder mehr Transformatoren, die sekundärseitig eine Dreieckbzw.- eine Sternschaltung aufweisen. Über die sekundärseitigen Stern- bzw. Dreieckschaltungen werden dabei wiederum phasenverschobene Spannungen an mindestens zwei Gleichrichtereinheiten GE abgegeben. Bei der Verwendung eines Stern-Dreieck-Transformators zur Phasenschiebung ist jedoch nachteilig, dass über den Drehstromtransformator DT1 die vollständige Scheinleistung übertragen werden muss, was eine entsprechende Dimensionierung des Drehstromtransformators DT1 bedingt. Ferner lässt sich der Wert der Phasenschiebung a nicht beliebig verändern.

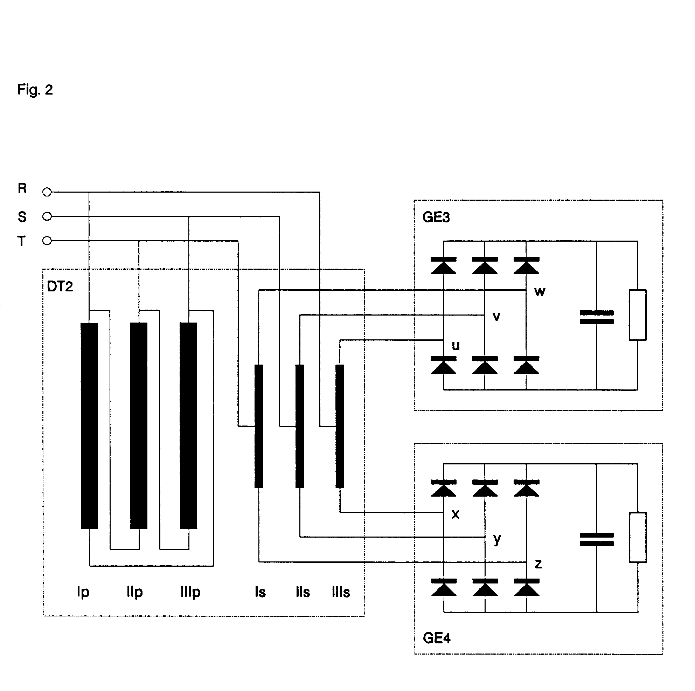

In Fig. 2 sind die Versorgungsleitungen R, S, T einerseits mit den in Dreieckschaltung zusammengefügten Primär- Ip, IIIp, IIp und den Mittelanzapfungen der Sekundärwicklungen IIIs, IIs, Is eines Drehstromtransformators DT2 verbunden. D.h. die Versorgungsleitung R ist mit der Primär- und der Sekundärwicklung Ip bzw. IIIs verbunden. Durch die angegebene Beschaltung des Drehstromtransformators DT2 ergeben sich Spannungen ux, vy, wz in den Sekundärwicklungen IIIs, IIs, Is, deren Vektoren senkrecht zu den Vektoren der Spannungen stehen, die über die Versorgungsleitungen R, S, T den entsprechenden Mittelanzapfungen der Sekundärwicklungen IIIs, IIs, Is zugeführt werden. Die oberen und die unteren Anschlüsse der Sekundärwicklungen Is, IIs, IIIs sind ferner mit Gleichrichtereinheiten GE3 bzw. GE4 verbunden.

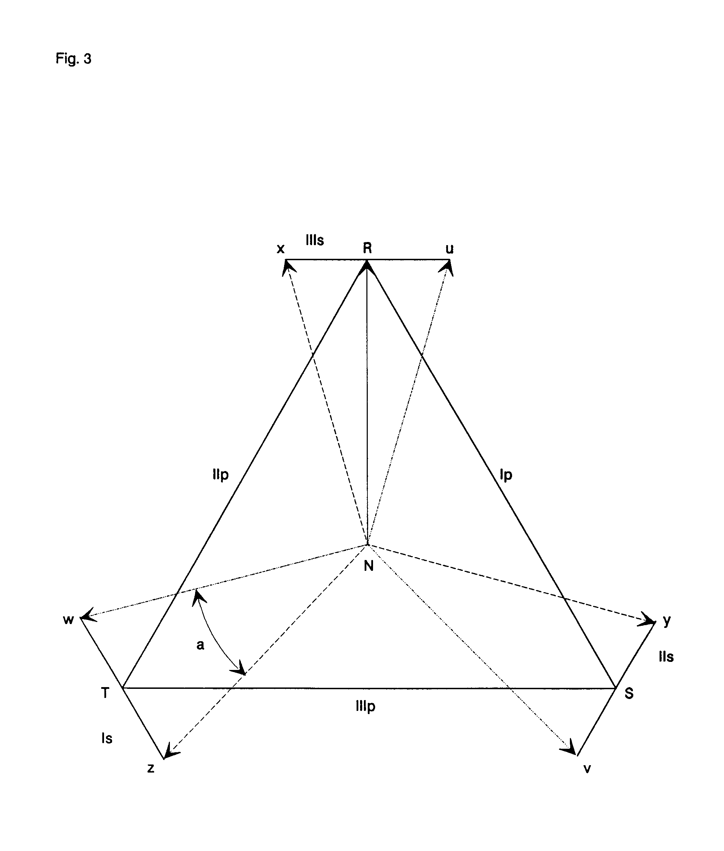

Die Vektoren der vom Drehstromtransformator DT2 an die Gleichrichtereinheiten GE3 bzw. GE4 abgegebenen Spannungen uvw, xyz sind in Fig. 3 aufgezeichnet. Dabei ist leicht ersichtlich, dass der Vektor der Spannung der Versorgungsleitung R senkrecht zum Vektor der Spannung an der Sekundärwicklung IIIs steht und mit ihm in der Mitte verbunden ist. Die Vektoren der Spannungen der Primär- und Sekundärwicklungen Ip, Is; IIp, IIs; IIIp, IIIs stehen parallel zueinander. Wird die Übersetzung wieder so gewählt, dass die an die Gleichrichtereinheiten GE3 bzw. GE4 abgegebenen Spannungen uvw, xyz bzw. deren Grundwellen um 30$^\circ$ phasenverschoben sind, ergibt sich eine andere Addition der pulsförmigen Ströme der Gleichrichtereinheiten GE3 und GE4. Wiederum werden jedoch Oberwellenströme mit den Ordnungszahlen 5, 7, 17 und 19 eliminiert. Ferner können auch mehr als zwei Gleichrichtereinheiten GE an den Drehstromtransformator DT2 angeschlossen werden. So können z.B. drei Gleichrichtereinheiten GE vorgesehen werden, die mit Phasenverschiebungen von $0^\circ$ und $+/-a/2$ relativ zu den Versorgungsspannungen angesteuert werden. Es können natürlich auch an weiteren vorzugsweise symmetrisch an den Sekundärwicklungen (Is, IIs, IIIs) vorgesehenen Anzapfungen Gleichrichtereinheiten GE angeschaltet werden.

Nebst der leichten Änderbarkeit der relativen Phasenverschiebung und der Amplituden der Spannungen uvw, xyz ergibt sich bei der Verwendung eines Drehstromtransformators wie er in Fig. 3 gezeigt wird auch der Vorteil, dass nur ein Bruchteil der Scheinleistung über den Drehstromtransformator DT2 übertragen werden muss, wobei die Scheinleistung auf der Primärseite kleiner ist als auf der Sekundärseite. Der Drehstromtransformator DT2 ist im vorliegenden Fall hauptsächlich darauf ausgelegt, die gewünschte Phasenverschiebung a zu erzeugen.

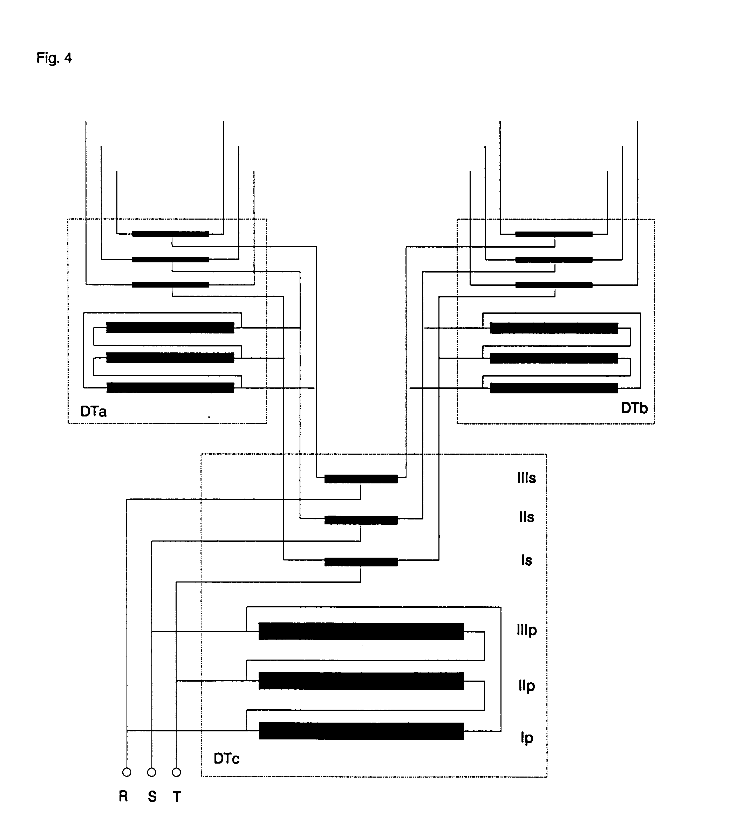

Wenn nach einer ersten Reduktion der kritischen Oberwellenströme weitere Oberwellenströme eliminiert werden sollen, so können, wie in Fig. 4 gezeigt, mehrere Drehstromtransformatoren DTa, DTb, DTc kaskadenartig zusammengeschaltet werden. Falls durch Verwendung von zwei Drehstromtransformatoren DTa, DTb z.B. die Oberwellenströme mit den Ordnungszahlen 5, 7, 17 und 19 eliminiert wurden, können verbleibende störende Oberweilenströme in einem weiteren Schritt durch Zuschaltung des Drehstromtransformators DTc eliminiert werden. Die Phasenverschiebung a in diesem Transformator wird dann entsprechend der festgelegten Ordnungszahlen gewählt, so z.B. $15^\circ$ für die Unterdrückung der Oberwellenströme mit den Ordnungszahlen 11, 13, 23 und 25.

## Patentansprüche

1. Verfahren zur Reduktion von Oberwellenströmen, die von Gleichrichtereinheiten an Versorgungsleitungen abgegeben werden, **dadurch gekennzeichnet**, dass mindestens zwei derart gegeneinander phasenverschobene Spannungen (uvw; xyz) an mindestens zwei Gleichrichtereinheiten (GE1, GE2) abgegeben werden, dass von den Gleichrichtereinheiten (GE1, GE2) verursachte, störende Oberwellenströme an den Anschlüssen der Versorgungsleitungen annähernd gegenphasig auftreten und sich gegenseitig aufheben.

2. Verfahren nach Anspruch 1, **dadurch gekennzeichnet**, dass zur Phasenschiebung mindestens ein Drehstromtransformator, vorzugsweise ein Spar- oder Stern-Dreieck-Transformator verwendet wird.

3. Verfahren nach Anspruch 1 oder 2, **dadurch gekennzeichnet**, dass zur Reduktion verbleibender Oberwellenströme, die von zwei gleichartig betriebenen Drehstomtransformatoren (DTa, DTb) an die Versorgungsleitungen (R, S, T) abgegeben werden, diese wiederum mit Ausgängen eines weiteren Drehstromtransformators (DTc) verbunden sind, welche um das gewünschte Mass phasenverschobene Spannungen abgeben.

4. Schaltungsanordnung zur Ausführung des Verfahrens nach Anspruch 1, **dadurch gekennzeichnet**, dass ein Drehstromtransformator (DT1) vorgesehen ist, dessen Primärwicklungen (Ip, IIp, IIIp) zu einer Dreieck- und dessen Sekundärwicklungen (Is, IIs, IIIs) zu einer Sternschaltung zusammengeschaltet sind und dass die drei Anschlüsse der Primärwicklung (Ip, IIp, IIIp) mit mindestens einer ersten (GE1) und die drei Anschlüsse der Sekundärwicklung (Is, IIs, IIIs) mit mindestens einer zweiten Gleichrichtereinheit (GE2) verbunden sind.

5. Schaltungsanordnung zur Ausführung des Verfahrens nach Anspruch 1, **dadurch gekennzeichnet**, dass ein Drehstromtransformator mit drei Primär- und sechs Sekundärwicklungen vorgesehen ist, dessen Primärwicklungen zu einer Stern- oder Dreieckschaltung und dessen Sekundärwicklungen zu einer Stern- und zu einer Dreieckschaltung zusammengeschaltet sind und dass mindestens die sekundärseitigen Stern- und Dreieckschaltungen je mit mindestens einer Gleichrichtereinheit verbunden sind.

6. Schaltungsanordnung zur Ausführung des Verfahrens nach Anspruch 1, **dadurch gekennzeichnet**, dass ein Drehstromtransformator (DT2) mit in Dreieck geschalteten Primärwicklungen (Ip, IIp, IIIp) vorgesehen ist, dass die Versorgungsleitungen (R, S, T) je primärseitig am Wicklungsende einer Primärwicklung (Ip, IIp, IIIp) bzw. sekundärseitig an einer Anzapfung einer Sekundärwicklung (IIIs, Is, IIs) derart angeschlossen sind, dass jeweils die von der Versorgungsleitung (R; S; T) geführte Spannung senkrecht zur Spannung (ux; vy; wz) der mit ihr über die Anzapfung verbundenen Sekundärwicklung (IIIs; IIs; Is) steht und dass die eine Seite der Sekundärwicklungen (IIIs, IIs, Is) mit einer ersten und die andere Seite der Sekundärwicklungen (IIIs, IIs, Is) mit einer zweiten Gleichrichtereinheit (GE3, GE4) verbunden ist.

7. Schaltungsanordnung nach Anspruch 6, **durch gekennzeichnet**, dass die Anzahl Windungen der Sekundärwicklungen (Is, IIs, IIIs) entsprechend der gewünschten Phasenverschiebung a zwischen den an die Gleichrichtereinheiten (GE3, GE4) abgegebenen Spannungen (uvw; xyz) gewählt ist.

8. Schaltungsanordnung nach Anspruch 7, **durch gekennzeichnet**, dass die Anzapfungen jeweils in der Mitte der Sekundärwicklungen (Is, IIs, IIIs) vorgesehen sind.

9. Schaltungsanordnung nach Anspruch 7 oder 8, **dadurch gekennzeichnet**, dass an den Sekundärwicklungen (Is, IIs, IIIs) weitere Anzapfungen vorgesehen sind.

Fig.1

Fig. 2

Fig. 3

Fig. 4

Europäisches
Patentamt

**EUROPÄISCHER
RECHERCHENBERICHT**

Nummer der Anmeldung

**EP 91 11 2660**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 448 286   (STACKEGARD) <br> * Spalte 1 * <br><br> – – – | 1,2,5 | H 02 M 7/08 <br> H 02 M 1/12 |
| A | SOVIET INVENTIONS ILLUSTRATED, Section X12, week 8651, 31 december 1986. Derwent Publications Ltd., London GB <br> * No 86-337999/51 & SU-A-1228200 (REPIN A M) 16 August 1982 * <br><br> – – – | 6-8 | |
| A | GB-A-2 001 486   (FOSTER TRANSFORMERS LTD) <br> * Zusammenfassung; Figur 3 * <br><br> – – – | | |
| A | CH-A-364 302   (OERLIKON) <br> * das ganze Dokument * <br><br> – – – – – | | |

| RECHERCHIERTE SACHGEBIETE (Int. Cl.5) |
|---|
| H 02 M <br> H 01 F |

Der vorliegende Recherchenbericht wurde für alle Patentansprüche erstellt

| Recherchenort | Abschlußdatum der Recherche | Prüfer |
|---|---|---|
| Den Haag | 12 September 91 | VAN DEN DOEL J.C. |